# EUROPÄISCHE PATENTSCHRIFT

(11) **EP 2 616 258 B1**
(45) Veröffentlichungstag und Bekanntmachung des Hinweises auf die Patenterteilung: **24.02.2016**
(21) Anmeldenummer: 11775728.6
(22) Anmeldetag: 14.09.2011
(51) Int. Cl.: B60H 1/00, F25B 45/00

(54) **SERVICE-GERÄT FÜR FAHRZEUGKLIMAANLAGEN UND VERFAHREN ZUM ENTFERNEN DES KÄLTEMITTELS BZW. EINES KÄLTEMITTEL/KOMPRESSORÖL-GEMISCHES AUS EINER FAHRZEUGKLIMAANLAGE**
SERVICE UNIT FOR VEHICLE AIR-CONDITIONING SYSTEMS AND METHOD FOR REMOVING THE COOLANT OR A COOLANT/COMPRESSOR OIL MIXTURE FROM A VEHICLE AIR-CONDITIONING SYSTEM
APPAREIL D'ENTRETIEN POUR CLIMATISEURS DE VÉHICULES, ET PROCÉDÉ PERMETTANT D'ÉLIMINER LE FRIGORIGÈNE OU UN MÉLANGE DE FRIGORIGÈNE/HUILE DE COMPRESSEUR D'UN CLIMATISEUR DE VÉHICULE

(30) Priorität: 14.09.2010 DE 202010012578 U
(43) Veröffentlichungstag der Anmeldung: 24.07.2013
(73) Patentinhaber: Dometic Sweden AB, 171 54 Solna (SE)
(72) Erfinder: ESCH, Franz-Josef, 48477 Hörstel (DE)
(74) Vertreter: Grosse Schumacher Knauer von Hirschhausen
(86) Internationale Anmeldenummer: PCT/EP2011/004621
(87) Internationale Veröffentlichungsnummer: WO 2012/034695

(56) Entgegenhaltungen:
- WO-A1-2011/066833
- US-A- 4 998 413

## Beschreibung

### GEBIET DER ERFINDUNG

Die Erfindung betrifft ein Service-Gerät für Fahrzeugklimaanlagen mit den Merkmalen des Oberbegriffs von Anspruch 1 sowie ein Verfahren zum Entfernen des Kältemittels bzw. eines Kältemittel/Kompressoröl-Gemisches aus einer Fahrzeugklimaanlage mit den Merkmalen des Oberbegriffs von Anspruch 10.

### TECHNOLOGISCHER HINTERGRUND

Eine zu wartende Fahrzeugklimaanlage besteht im westlichen aus einem in der Regel ölgeschmierten Kompressor, einem Verflüssiger, einen Verdampfer, sowie zwischen diesen Komponenten, ein geschlossenes Kühlmittelsystem herstellende Rohrleitungen. Ferner ist in der Regel ein Trockner vorgesehen, der auch als Sammler oder Reservoir für Kältemittel dienen kann. Schließlich sind für den Fluidaustausch zwei Serviceanschlüsse in den Kältemittelkreislauf eingebaut. Die am Verdampfer im Fahrzeug zur Verfügung stehende Kälte wird durch ein Kaltluftgebläse ab- und dem Fahrzeuginnenraum zugeführt. Die Kondensationswärme des Verflüssigers wird durch ein Warmluftgebläse abtransportiert. Service-Anschluss-Verbinder an der Fahrzeugklimaanlage gestatten es, im Wartungsfalle Kältemittel/Kompressoröl-Gemisch an mindestens einem, insbesondere an dem Niederdruck (ND)-Serviceanschluss, abzuziehen bzw. aufzufüllen. Die Fahrzeugklimaanlagen unterscheiden sich von Fahrzeugtyp zu Fahrzeugtyp und sind nicht Gegenstand der vorliegenden Erfindung.

Service-Geräte für Fahrzeugklimaanlagen dienen unter anderem dazu, im Rahmen einer Wartung den Kältemittelkreislauf unterschiedlichster Fahrzeugklimaanlagen von Zeit zu Zeit zu entleeren und eine neue Kältemittelfüllung einzubringen. Dabei ist es erforderlich genaue Mengen und Kältemittelspezifikationen einzuhalten. Außerdem muss in vielen Fällen Schmieröl für den Kompressor des Kältemittelkreislaufs der Fahrzeugklimaanlage entfernt und wieder nachgefüllt werden. Auch dies erfolgt in vom Fahrzeugtyp bzw. Klimagerätetyp abhängigen Mengen und Spezifikationen. Manche Fahrzeugklimaanlagen benötigen außerdem ein Additiv für den Kältemittelkreislauf, welches bei einem Wartungsservice ebenfalls teilweise ausgetauscht wird. Üblicherweise gelangt das Kompressorenöl in den Kältemittelkreislauf und wird beim Betrieb der Fahrzeugklimaanlagen daher mit umgepumpt. Nur ganz bestimmte Paarungen von Kältemittel und Kompressorenöl sind für diesen Zweck miteinander verträglich. Um nach dem Absaugen des Kältemittel/Kompressorenölgemisches zumindest einen Teil des Kältemittels zur Wiederverwendung zurückgewinnen zu können, weisen Service-Geräte für Fahrzeugklimaanlagen üblicherweise auch einen Separator auf, mit welchem Kältemittel aus dem Kältemittel/Kompressorenölgemisch zur Wiederverwendung abgetrennt werden kann. Gebrauchtes Kompressorenöl sowie, gegebenenfalls, gebrauchtes Additiv wird/werden in der Regel durch das Service-Gerät aufgefangen, um später verworfen zu werden.

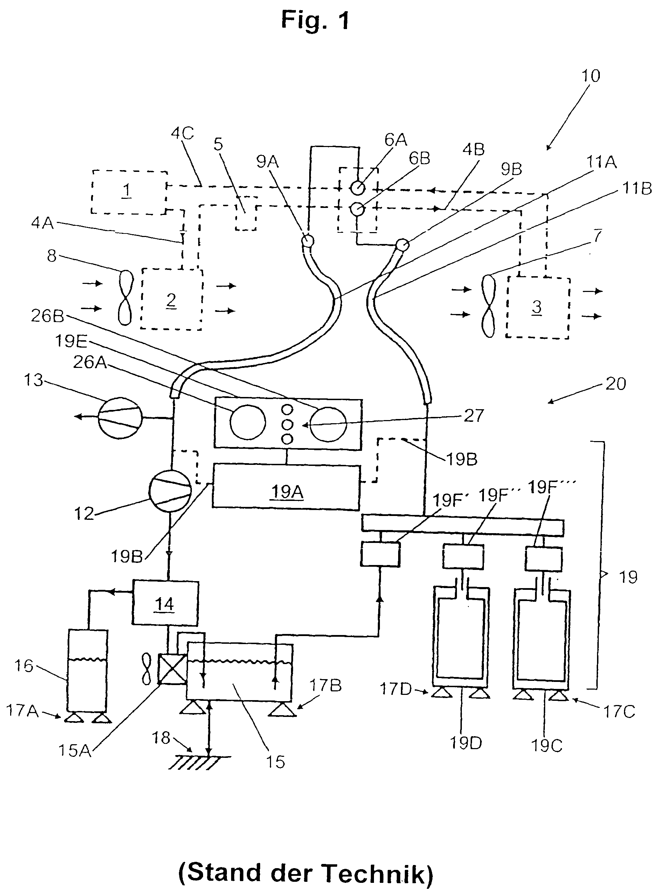

Aus der WO 2007/085480 der Anmelderin ist ein Service-Gerät für Fahrzeugklimaanlagen gemäß dem Blockschaltbild und Fig. 1 bekannt. Diese zeigt in durchgezogener Linie die wesentlichen Bestandteile des gattungsgemäßen Service-Gerätes für eine Fahrzeugklimaanlage und in gestrichelten Linien eine zu wartende Fahrzeugklimaanlage. Letztere besteht aus einem ölgeschmierten Kompressor 1, einem Verflüssiger 2, einen Verdampfer 3, sowie zwischen diesen Komponenten, ein geschlossenes Kühlmittelsystem herstellende Rohrleitungen 4A-4C. Ferner ist ein Trockner 5 vorgesehen, der auch als Sammler oder Reservoir für Kältemittel dienen kann. Schließlich sind für den Fluidaustausch zwei Serviceanschlüsse 6a/6b in den Kältemittelkreislauf eingebaut. Die am Verdampfer 3 zur Verfügung stehende Kälte wird durch ein Kaltluftgebläse 7 ab- und dem Fahrzeuginnenraum zugeführt. Die Kondensationswärme des Verflüssigers 2 wird durch ein Warmluftgebläse 8 abtransportiert. Service-Anschluss-Verbinder 9A und 9B gestatten es, im Wartungsfalle Kältemittel/Kompressoröl-Gemisch an den Serviceanschlüssen 6A, 6B abzuziehen bzw. aufzufüllen. Die insgesamt mit 10 bezifferte Fahrzeugklimaanlage unterscheidet sich von Fahrzeugtyp zu Fahrzeugtyp und ist nicht Gegenstand der vorliegenden Erfindung.

Ein insgesamt mit 20 bezeichnetes Servicegerät für eine Fahrzeugklimaanlage weißt flexible Druckschläuche 11A, 11 B zum Verbinden des Servicegerätes 20 mit der Fahrzeugklimaanlage 10 über die Service-Anschlussverbinder 9A, 9B an den Serviceanschlüssen 6A, 6B auf. Eine als Kältemittelkompressor ausgebildete Absaugpumpe 12 fördert gebrauchtes Kältemittel/Kompressoröl-Gemisch über die Druckschläuche 11A rund 11 B und den Separator 14. Dieser trennt durch Verdampfen Kältemittel aus dem abgesaugten Gemisch ab und führt dies einem als Druckbehälter ausgebildeten Kältemittelvorrat 15 zu. Im Separator 14 abgeschiedenes Kompressoröl/Additiv-Gemisch wird in einem austauschbaren Altölbehälter 16 aufgefangen und mittels einer Wägeeinrichtung 17A gewichtsmäßig erfaßt. Mit dem Kältemittelvorrat 15 ist ein luftgekühlter Kältemittelverflüssiger 15A fest verbunden. Damit wird rückgeführtes Kältemittel überwiegend in flüssiger Form dem Kältemittelvorrat 15 zugeführt. Der gesamte Kältemittelvorrat samt Verflüssiger ruht auf einer weiteren Wägeeinrichtung 17B zum Erfassen des zu- und abgeführten sowie des vorrätigen Kältemittels. Eine Vakuumpumpe 13 sorgt nach dem Absaugen des gebrauchten Gemisches für den für das Wiederbefüllen erforderlichen Unterdruck im Kreislauf der Fahrzeugklimaanlage und gibt das abgesaugte Gasvolumen an die Atmosphäre ab.

Ein insgesamt mit 19 bezeichnetes Wiederauffüllsystem besteht im wesentlichen aus austauschbaren Vorratsbehältern 19D für Kompressoröl und 19C für Additive, einer Steuereinheit 19A mit Ventilblock und Steuerleitungen 19B, einer Fernanzeige 19E sowie Dosier- und Ventileinheiten 19F' bis 19F'''. Die Vorratsbehälter 19C und 19D sind bevorzugt wägbar. Hierzu dienen weitere Wägeeinrichtungen 17C, 17D.

Aus der DE 20 2008 003 123 U1 ist ein weiteres Service-Gerät für Fahrzeugklimaanlagen der Anmelderin bekannt, bei dem die Wiederbefüllbarkeit der zuvor evakuierten Fahrzeug-Klimaanlage durch eine im Kältemittel-Vorratsbehälter vorgesehene Wärmequelle zur Druckerhöhung des Kältemittels verbessert wird.

Die noch unveröffentlichte Deutsche Patentanmelung Nr. 10 2009 054 436.4 der Anmelderin, eingereicht am 25. November 2009, deren Offenbarung in die vorliegende Patentanmeldung mit einbezogen wird, ist es bekannt, beim Warten von Fahrzeugklimaanlagen die in dem Kältemittel-Kreislaufsystem der Fahrzeugklimaanlage zunächst vorhandenen Kältemittelmengen möglichst genau zu erfassen, um die Diagnose über den Zustand der Fahrzeugklimaanlage zu verbessern. Hierzu wird ein Service-Gerät für Fahrzeugklimaanlagen mit einer Entleer- und einer Befülleinrichtung zum Absaugen des Kältemittel-/Kompressoröl-Gemisches aus dem Kältemittel-Kreislaufsystem einer Fahrzeugklimaanlage und zum Wiederauffüllen der Fahrzeugklimaanlage mit Kältemittel und Kompressoröl mit einer mindestens einen Separator, einen Kältemittelverdichter und eine Kältemittelwägeeinrichtung umfassenden Trennstufe und mit einer Vakuumpumpe zum Restentleeren des Kältemittel-Kreislaufsystems der Fahrzeugklimaanlage vorgeschlagen, bei dem mindestens ein druck- und/oder zeitgesteuerter Umschalt-Ventilblock zum wahlweisen direkten fluidischen Durchverbinden des Kältemittel-Kreislaufsystems mit der Trennstufe und zum Umleiten der Strömungsverbindung vom Kältemittel-Kreislaufsystems der Fahrzeugklimaanlage über die Vakuumpumpe zur Trennstufe vorgesehen ist.

Aus der US 4,998,413 A ist als nächster Stand der Technik ein Service-Gerät für Fahrzeugklimaanlagen bekannt mit einer Entleer- und einer Befülleinrichtung zum Entfernen des Kältemittels bzw. eines Kältemittel/Kompressoröl-Gemisches aus einer Fahrzeugklimaanlage und zum Wiederauffüllen der Fahrzeugklimaanlage mit Kältemittel und ggf. mit Kompressoröl, mit mindestens einem Behälter für Kältemittel und mit einer Vakuumpumpe zum Erzeugen eines Unterdruckes in der von Kältemittel bzw. Kältemittel/Kompressoröl-Gemisch entleerten Fahrzeugklimaanlage für ein nachfolgendes Ansaugen von Kältemittel und ggf. von Kompressoröl in die wieder zu befüllende Fahrzeugklimaanlage.

### DARSTELLUNG DER ERFINDUNG

Der Erfindung liegt die Aufgabe zugrunde, in einem gattungsgemäßen Service-Gerät für Fahrzeugklimaanlagen entflammbare oder anderweitig kritische Kältemittel, wie z.B. das Kältemittel R-1234 yf" gefahrlos nutzen zu können. Diese Aufgabe löst ein Service-Gerät für Fahrzeugklimaanlagen mit den Merkmalen des Anspruchs 1 sowie ein Verfahren mit den Merkmalen des Anspruchs 10.

Demnach sieht die Erfindung vor, dass bei einem gattungsgemäßen Service-Gerät für Fahrzeugklimaanlagen ein karminartiger Gassammelraum innerhalb des Service-Gerätes vorgesehen ist. Der karminartige Gassammelraum weist eine obere und eine untere Öffnung zur Umgebungsatmosphäre auf und ist gegenüber der Umgebungsatmosphäre im Übrigen abgeschottet. Ein Aktiv-Lüfter ist derart vorgesehen, dass der karminartige Gassammelraum von oben nach unten mit Umgebungsluft durchströmbar ist. Dadurch wird erreicht, dass alle Bereiche des Service-Gerätes, die systematisch oder aufgrund von Leckagen mit dem Gas des Kältemittels im Berührung kommen können, an den karminartigen Gassammelraum fluidisch angeschlossen und gegenüber der übrigen Umgebungsatmosphäre abgeschottet werden können. Dadurch kann austretendes Kältemittelgas von potentiell Funken bildenden Geräteteilen ferngehalten werden. Mit der Umgebungsatmosphäre notgedrungen in fluidischer Verbindung stehende andere Geräteteile werden also gegenüber dem karminartigen Gassammelraum abgeschottet.

Der Aktivlüfter sorgt für ein Durchströmen des karminartigen Gassammelraums von oben nach unten, wozu Umgebungsluft verwendet wird. Dadurch wird zum Einen erreicht, dass auch in verwinkelteren Bereichen des karminartigen Gassammelraumes ein Gasaustausch stattfindet. Zum anderen wird es dadurch möglich, in dem karminartigen Gassammelraum auch gewisse elektrische Bauteile unterzubringen, ohne dass sich dadurch das Risiko von Explosion, Verpuffungen oder Entflammungen in der Atmosphäre des karminartigen Gassammelraumes erhöht. Dies ist vor allem von Vorteil, wenn übliche Vakuumpumpen in dem Klimaservice-Gerät verwendet werden, bei denen der elektrische Geräteteil der Vakuumpumpe mit dem zu evakuierenden Gas in Berührung kommen kann. Die aktive Belüftung sorgt hier dafür, dass solche Gasbestandteile rasch nach außen abgeführt werden, so dass auch aufwendigere Vakuumpumpen-Konstruktionen mit einer vollständigen Trennung des elektrischen Teils von der Gasatmosphäre entbehrlich sind. Diese Aktiv-Belüftung kann durch zusätzliche zweite und/oder dritte Aktiv-Lüftungen weiter unterstützt werden.

Wenn die Atmosphäre im karminartigen Gassammelraum insgesamt schwerer als Luft ist, kann der Aktivlüfter während Stillstandsphasen oder Phasen der Nichtbenutzung des Service-Gerätes ausgeschaltet bleiben, weil elektrische Funken in diesen Phasen nicht entstehen und es daher ausreicht, wenn die schwereren Gase innerhalb des karminartigen Gassammelraumes nach unten sinken und diesen durch die untere Öffnung zur Umgebung verlassen.

Wenn der Aktiv-Lüfter oder zumindest seine elektrisch versorgten Bauteilgruppen ggf. eine Gerätesteuerung außerhalb des Klimaservice-Gerätes oder zumindest an dessen Außenseite angeordnet sind, können dadurch auch von dem Aktivlüfter selbst ausgehende potentielle Entzündungsrisiken im karminartigen Gassammelraum vermieden werden.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel eines Klimaservicegerätes dargestellt ist.

### FIGURENKURZBESCHREIBUNG

In der Zeichnung zeigen
- Fig. 2: das Service-Gerät für Fahrzeugklimaanlagen im Vertikalschnitt (Schnitt entlang der Linie I-I gemäß Figur 3) sowie
- Fig. 3: dasselbe Gerät im um 90° versetzen Vertikalschnitt (Schnitt entlang der Linie III-III gemäß Fig. 2)

### DARSTELLUNG EINES AUSFÜHRUNGSBEISPIELES

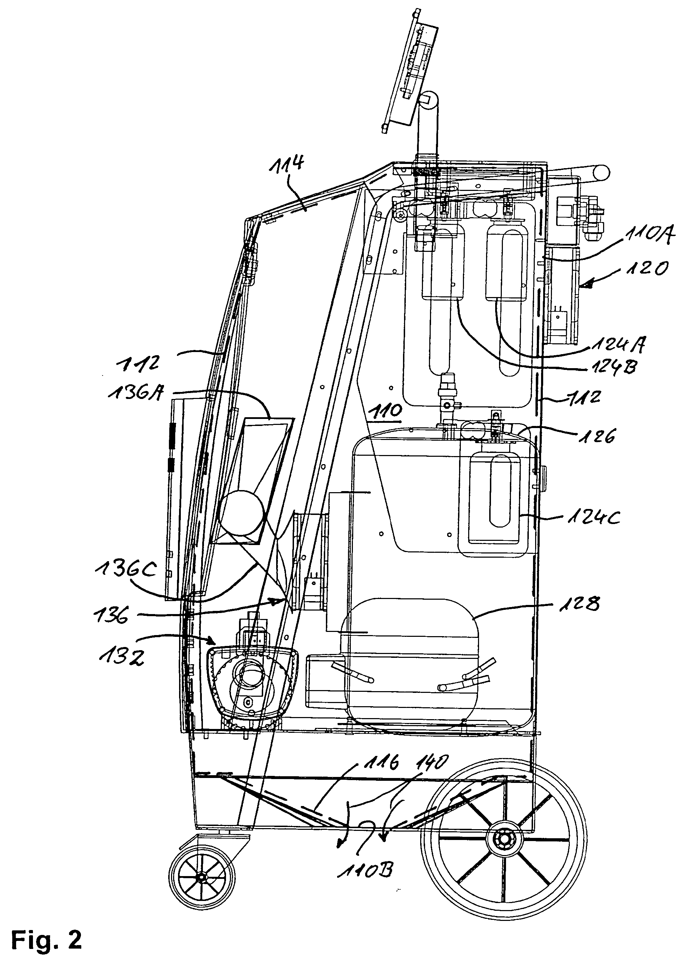

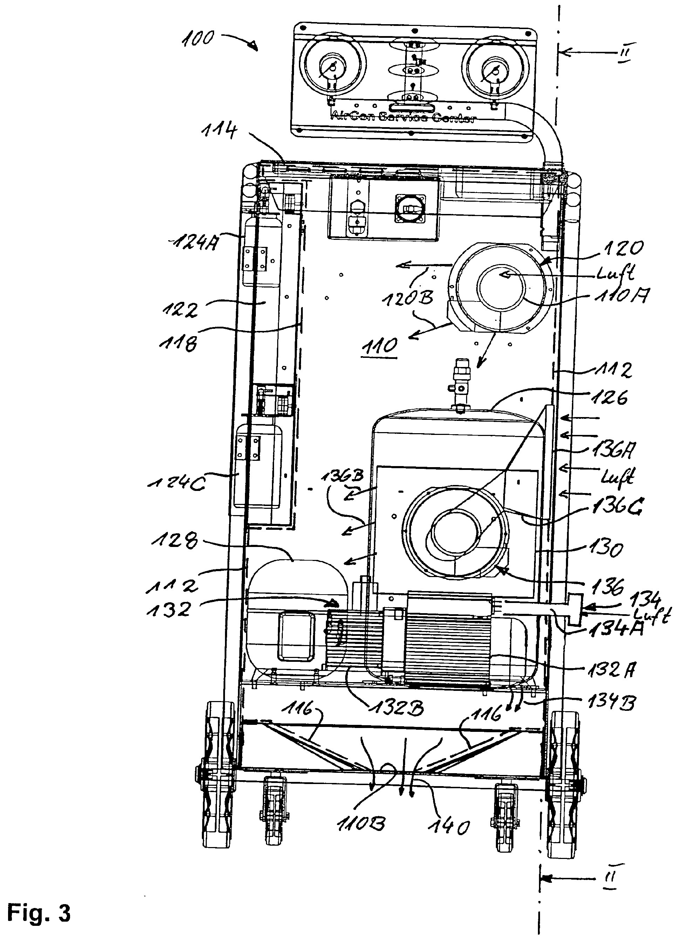

Wie aus den Schnittdarstellungen in Figuren 2 und 3 ersichtlich, wird der karminartige Gassammelraum 110 größtenteils von den in sich geschlossenen Gerätewandungen 112 an den Geräteaußenseiten, dem Gerätedeckel 114 und einem am unteren Geräteende befindlichen trichterförmigen Boden 116 oder z.B. ein (nicht dargestelltes) Lochblech gebildet. An die obere Öffnung 110A des karminartigen Gassammelraumes 110 ist ein erster elektrischer Lüfter als Aktiv-Lüfter 120 von der Geräteaußenseite her angedockt. Die untere Öffnung 110B des karminartigen Gassammelraumes 110 zur Atmosphäre befindet sich am unteren Ende des trichterförmigen Bodens 116, Lochblechs oder dergleichen. Eine oder mehrere Abschottungswand 118 oder -wände im Geräteinneren kann den karminartigen Gassammelraum 110 von Aufbewahrungsräumen 122 zur Aufnahme von Vorratsbehältern 124A, 124B, 124C für Kompressoröle, Additive, verbrauchte Kreislaufflüssig und/oder dergleichen abschotten, die vom Geräteäußeren her zugänglich bleiben. Es kann aber auch eine fluidische Verbindung zwischen mindestens einem der Aufbewahrungsräume 122 und dem karminartigen Gassammelraum 110 bestehen, wenn eine Abschottung des mindestens einen der Aufbewahrungsräume 122 an seiner Geräteaußenwand 112 erfolgt. Der karminartige Gassammelraumes 110 ist in Figuren 2 und 3 exemplarisch und nur zu Verdeutlichungszwecken mit einer zusätzlichen gestrichenen Linie umgeben.

Innerhalb des karminartigen Gassammelraumes befinden sich neben einem Sammelbehälter 126 für Kältemittel u.A. ein Kompressor 128 und ein Kondensator 130 sowie eine Vakuumpumpe 132 mit Elektromotor 132A und Verdichterteil 132B. Diese Geräteteile können - wie auch das übrige Klimaservice-Gerät 100 - in der Weise zusammen wirken, wie in Figur 1 dem Stand der Technik entsprechend dargestellt.

Ein zweiter Lüfter 134 kann im Bereich einer Gerätewand 112 zusätzlich angeordnet sein, um den Elektromotor 132A der Vakuumpumpe 132 zusätzlich zu belüften. Dafür ist eine Öffnung 134A einer Geräteseitenwand 112 vorgesehen, durch die der Lüfter mit der Atmosphärenluft in Verbindung steht. Der von dem zweiten Lüfter 134 erzeugte Zusatzluftstrom 134B fließt zusammen mit dem Aktivlüfter 120 erzeugten Luftstrom 120B über die bodenseitige Öffnung 110B des karminartigen Gassammelraumes 110 als Gesamtluftstrom 140 ab.

Um eine ausreichende Wärmeabfuhr an dem Kondensator 130 sicher zu stellen, kann dieser über einen dritten Lüfter 136 mit der Außenatmosphäre verbunden sein. Hierzu ist der Lüfter 136 über eine weitere Öffnung 136A in der Geräteaußenwand 112 und einen Belüftungskanal 136C mit der Außenatmosphäre fluidisch verbunden. Hierdurch ist der karminartige Gassammelraum 110 gegenüber der Außenatmosphäre im Übrigen abgeschottet. Auch die von dem dritten Lüfter 136 erzeugte Luftströmung verlässt mit dem Gesamtluftstrom 114 das Service-Gerät 100 über die untere Öffnung 110B des karminartigen Gassammelraum den Geräteboden 116.

Der dritte Lüfter 136 sowie der Elektromotor der Vakuumpumpe und der Kompressor 128 sind vorzugsweise so geschaltet, dass sie nur anspringen können, wenn der erste Lüfter 120 im Betrieb ist und der nach unten gerichtete Luftstrom im karminartigen Gassammelraum 110 demzufolge aktiv ist. Der zweite und dritte Lüfter unterstützen die Aktivdurchlüftung des karminartigen Gassammelraumes 110 und seine Schutzfunktion.

**BEZUGSZEICHENLISTE**

| | | | |
|---|---|---|---|
| 1 | Kompressor | 20 | Service-Gerät |
| 2 | Verdampfer | 26A | Niederdruckmanometer |
| 3 | Verflüssiger | 26B | Hochdruckmanometer |
| 4A-C | Rohrleitungen | 100 | Service-Gerät |
| 5 | Abscheider | 110 | Gassammelraum |
| 6A/B | Serviceanschlüsse | 110A | obere Öffnung |
| 7 | Kaltluftgebläse | 110B | untere Öffnung |
| 8 | Warmluftgebläse | 112 | Seitenwände |
| 9A/B | Service-Anschlussverbinder | 114 | Gerätedeckel |
| 10 | Fahrzeugklimaanlage | 116 | Boden |
| 11A/B | Druckschläuche | 118 | Abschottungswand |
| 12 | Absaugpumpe | 120 | Aktiv-Lüfter |
| 13 | Vakuumpumpe | 122 | Aufbewahrungsraum |
| 14 | Separator | 124A-C | Vorratsbehälter |
| 15 | Kältemittelvorrat | 126 | Kältemittelbehälter |
| 15A | Kältemittelverflüssiger | 128 | Kompressor |
| 16 | Altölbehälter | 130 | Kondensator |
| 17A-J | Wägeeinrichtungen | 132 | Vakuumpumpe |
| 18 | Entlastungseinrichtung | 132A | Elektromotor |
| 19 | Wiederauffüllsystem | 132B | Verdichter |
| 19A | Steuereinheit mit Ventilblock | 134 | zweiter Lüfter |
| 19B | Steuerleitungen | 134A | Öffnung |
| 19C | Vorratsbehälter | 134B | Zusatzluftstrom |
| 19D | Vorratsbehälter | 136 | dritter Lüfter |
| 19E | Fernanzeige | 136A | Öffnung |
| 19F' | Dosier- und Ventileinheit | 136C | Belüftungskanal |
| 19F" | Dosier- und Ventileinheit | 140 | Gesamtluftstrom |
| 19F''' | Dosier- und Ventileinheit | | |

## Patentansprüche

1. Service-Gerät für Fahrzeugklimaanlagen,
mit einer Entleer- und einer Befülleinrichtung zum Entfernen des Kältemittels bzw. eines Kältemittel/Kompressoröl-Gemisches aus einer Fahrzeugklimaanlage und zum Wiederauffüllen der Fahrzeugklimaanlage mit Kältemittel und ggf. mit Kompressoröl,
mit mindestens einem Behälter (126) für Kältemittel und
mit einer Vakuumpumpe (132) zum Erzeugen eines Unterdruckes in der von Kältemittel bzw. Kältemittel/Kompressoröl-Gemisch entleerten Fahrzeugklimaanlage für ein nachfolgendes Ansaugen von Kältemittel und ggf. von Kompressoröl in die wieder zu befüllende Fahrzeugklimaanlage,
**dadurch gekennzeichnet,**
**dass** ein karminartiger Gassammelraum (110) mit oberen und unteren Öffnungen (110A, 110B) innerhalb des Service-Gerätes (100) angeordnet und im Übrigen gegenüber der Umgebungsatmosphäre abgeschottet ist und
**dass** ein Aktiv-Lüfter (120) zum Durchströmen des karminartigen Gassammelraums (110) mit Umgebungsluft von oben nach unten vorgesehen ist.

2. Service-Gerät nach Anspruch 1, **dadurch gekennzeichnet, dass** von dem Aktiv-Lüfter (120) und/oder etwaigen zusätzlichen Aktiv-Lüftern zumindest die mit elektrischer Spannung beaufschlagen Geräteteile und/oder seine Steuerung außerhalb oder an der Außenseite des Service-Gerätes angeordnet ist.

3. Service-Gerät nach Anspruch 1 oder 2, **gekennzeichnet durch** Einen zusätzlichen Aktiv-Lüfter (134) zum Beaufschlagen einer innerhalb des karminartigen Gassammelraumes (110) angeordnete Vakuumpumpe (132) mit Umgebungsluft.

4. Service-Gerät nach einem der Ansprüche 1 bis 3, **dadurch gekennzeichnet, dass** mindestens eine, insbesondere eine übliche, Vakuumpumpe (132) in dem Klimaservice-Gerät verwendet wird, bei der der elektrische Geräteteil der Vakuumpumpe (132) mit dem zu evakuierenden Gas in Berührung kommt.

5. Service-Gerät nach einem der Ansprüche 1 bis 4, **gekennzeichnet durch** einen zusätzlichen Aktiv-Lüfter (136) zum Beaufschlagen eines innerhalb des karminartigen Gassammelraumes (110) angeordneten Kondensators (130) mit Umgebungsluft.

6. Service-Gerät nach einem der Ansprüche 1 bis 5, **dadurch gekennzeichnet, dass** die Luftströme sämtlicher Aktiv-Lüfter über eine bodenseitige Austrittsöffnung (110B) des karminartigen Gassammelraumes (110) als Gesamtluftstrom (140) abführbar sind.

7. Service-Gerät nach einem der Ansprüche 1 bis 6, **dadurch gekennzeichnet, dass** von außen zusätzliche Vorratsbehälter (124A, 124B, 124C) des Service-Geräts durch mindestens eine Abschottungswand (118) von dem karminartigen Gassammelraum (110) fluidisch abgeschottet sind.

8. Service-Gerät nach einem der Ansprüche 1 bis 7, **dadurch gekennzeichnet, dass**, zumindest ein Teil der Bereiche des Service-Gerätes, die systematisch oder aufgrund von Leckagen mit dem Gas des Kältemittels im Berührung kommen oder kommen können, an den karminartigen Gassammelraum fluidisch angeschlossen und gegenüber der übrigen Umgebungsatmosphäre abgeschottet werden oder werden können.

9. Service-Gerät nach einem der Ansprüche 1 bis 8, **dadurch gekennzeichnet, dass**, etwaige weitere Aktiv-Lüfter, der Elektromotor einer etwaigen Vakuumpumpe und/oder ein Kompressor vorzugsweise so geschaltet sind, dass sie in der Regel nur dann anspringen können, wenn der nach unten gerichtete Luftstrom im karminartigen Gassammelraum (110) aktiv ist.

10. Verfahren zum Entfernen des Kältemittels bzw. eines Kältemittel/Kompressoröl-Gemisches aus einer Fahrzeugklimaanlage und zum Wiederauffüllen der Fahrzeugklimaanlage mit Kältemittel und ggf. mit Kompressoröl mittels eines Service-Gerätes mit mindestens einem Behälter (126) für Kältemittel und mit einer Vakuumpumpe (132) zum Erzeugen eines Unterdruckes in der von Kältemittel bzw. Kältemittel/Kompressoröl-Gemisch entleerten Fahrzeugklimaanlage für ein nachfolgendes Ansaugen von Kältemittel und ggf. von Kompressoröl in die wieder zu befüllende Fahrzeugklimaanlage,
**dadurch gekennzeichnet,**
**dass** ein karminartiger Gassammelraum (110) mit oberen und unteren Öffnungen (110A, 110B) innerhalb des Service-Gerätes (100) vorgesehen und gegenüber der übrigen Umgebungsatmosphäre abgeschottet wird und
**dass** der karminartige Gassammelraums, insbesondere mittels mindestens eines Aktiv-Lüfters (120), von oben nach unten mit Umgebungsluft durchströmt wird.

11. Verfahren nach Anspruch 10, **dadurch gekennzeichnet, dass** der mindestens eine Aktivlüfter (120) für den karminartigen Gassammelraum (110) während Stillstandsphasen oder Phasen der Nichtbenutzung des Service-Gerätes ausgeschaltet bleibt, und die Gase innerhalb des karminartigen Gassammelraumes nach unten sinken gelassen werden, so dass sie den karminartigen Gassammelraum durch die untere Öffnung zur Umgebungsatmosphäre hin verlassen.

12. Verfahren nach Anspruch 10 oder 11 umfassend einen Trennschritt für Kältemittel/Kompressoröl-Gemisch, **dadurch gekennzeichnet, dass** das Kältemittel-Kreislaufsystem der Fahrzeugklimaanlage mittels einer Vakuumpumpe (132) restentleert wird und das Kältemittel-Kreislaufsystem mit einer Trennstufe für Kältemittel/Kompressoröl-Gemisch über die Vakuumpumpe zwecks Wiedergewinnung von Kältemittel aus der Restentleerung des Kältemittel-Kreislaufsystems fluidisch verbunden wird.

## Claims

1. Service apparatus for vehicle air-conditioning systems, with
an emptying and a filling device for removing the refrigerant or a refrigerant/compressor oil mixture from a vehicle air-conditioning system and for refilling the vehicle air-conditioning system with refrigerant and if applicable with compressor oil,
with at least one container (126) for refrigerant and
with a vacuum pump (132) for generating a negative pressure in the vehicle air-conditioning system, which has been emptied of refrigerant or a refrigerant/compressor oil mixture, for a subsequent aspiration of refrigerant and if applicable of compressor oil into the vehicle air-conditioning system to be refilled,
**characterised by**
that a chimney-like gas collecting chamber (110) with upper and lower openings (110A, 110B) is arranged inside the service apparatus (100) and is otherwise sealed off from the ambient atmosphere, and
an active fan (120) is provided for the flow of ambient air through the chimney-like gas collection chamber (110) from top to bottom.

2. Service apparatus according to claim 1, **characterised by** that at least the apparatus parts of the active fan (120) and/or any additional active fans, to which parts electrical voltage is applied, and/or the control system thereof are arranged outside or on the outside of the service apparatus.

3. Service apparatus according to claim 1 or 2, **characterised by** an additional active fan (134) for acting on a vacuum pump (132) arranged inside the chimney-like gas collection chamber (110) with ambient air.

4. Service apparatus according to one of claims 1 to 3, **characterised by** that at least one, in particular a customary, vacuum pump (132) is used in the air-conditioning service apparatus, in which the electrical apparatus part of the vacuum pump (132) comes into contact with the gas to be evacuated.

5. Service apparatus according to one of claims 1 to 4, **characterised by** an additional active fan (136) for acting on a condenser (130) arranged inside the chimney-like gas collection chamber (110) with ambient air.

6. Service apparatus according to one of claims 1 to 5, **characterised by** that the air streams of all active fans can be conducted away as an overall air stream (140) via a bottom exit opening (110B) of the chimney-like gas collection chamber (110).

7. Service apparatus according to one of claims 1 to 6, **characterised by** that additional storage containers (124A, 124B, 124C) of the service apparatus are sealed off fluidically from the outside by at least one bulkhead wall (118) from the chimney-like gas collection chamber (110).

8. Service apparatus according to one of claims 1 to 7, **characterised by** that at least a portion of the regions of the service apparatus which come or can come into contact with the gas of the refrigerant systematically or owing to leakages are or can be connected fluidically to the chimney-like gas collection chamber and shut off from the remaining ambient atmosphere.

9. Service apparatus according to one of claims 1 to 8, **characterised by** that any further active fans, the electric motor of any vacuum pump and/or a compressor are preferably connected in such a manner that they can generally only start up if the air stream directed downwards in the chimney-like gas collection chamber (110) is active.

10. Method for removing the refrigerant or a refrigerant/compressor oil mixture from a vehicle air-conditioning system and for refilling the vehicle air-conditioning system with refrigerant and if applicable with compressor oil by means of a service apparatus, with at least one container (126) for refrigerant and with a vacuum pump (132) for generating a negative pressure in the vehicle air-conditioning system, which has been emptied of refrigerant or refrigerant/compressor oil mixture, for subsequent aspiration of refrigerant and if applicable of compressor oil into the vehicle air-conditioning system to be refilled,
**characterised by**
that a chimney-like gas collection chamber (110) with upper and lower openings (110A, 110B) is provided inside the service apparatus (100) and is shut off from the remaining ambient atmosphere, and
that ambient air flows through the chimney-like gas collection chamber from top to bottom, in particular by means of at least one active fan (120).

11. Method according to claim 10, **characterised by** that the at least one active fan (120) for the chimney-like gas collection chamber (110) remains switched off during stoppage phases or phases of non-use of the service apparatus, and the gases are allowed to sink downwards inside the chimney-like gas collection chamber, so that they exit the chimney-like gas collection chamber through the lower opening towards the ambient atmosphere.

12. Method according to claim 10 or 11, comprising a separation step for refrigerant/compressor oil mixture, **characterised by** that residues are emptied from the refrigerant circuit system of the vehicle air-conditioning system by means of a vacuum pump (132) and the refrigerant circuit system is connected fluidically to a separation stage for refrigerant/compressor oil mixture via the vacuum pump for the purpose of recovering refrigerant from the residue emptying of the refrigerant circuit system.

## Revendications

1. Appareil d'entretien pour climatiseurs de véhicule, comprenant
un dispositif de vidange et un dispositif de remplissage permettant d'éliminer le frigorigène et/ou un mélange de frigorigène/huile de compresseur d'un climatiseur de véhicule et de reremplir le climatiseur de véhicule avec du frigorigène et le cas échéant avec de l'huile de compresseur,
au moins un conteneur (126) pour frigorigène et
une pompe à vide (132) pour générer une dépression dans le climatiseur de véhicule vidangé de frigorigène et/ou de mélange de frigorigène/huile de compresseur pour une admission subséquente de frigorigène et le cas échéant d'huile de compresseur dans le climatiseur de véhicule à reremplir,
**caractérisé en ce que**
un collecteur de gaz (110) de type cheminée présentant des ouvertures supérieure et inférieure (110A, 110B) est disposé dans l'appareil d'entretien (100) en étant par ailleurs isolé de l'atmosphère ambiante et **en ce que**
un ventilateur actif (120) est prévu pour faire passer de haut en bas l'air ambiant dans le collecteur de gaz (110) de type cheminée.

2. Appareil d'entretien selon la revendication 1, **caractérisé en ce qu'**au moins les parties du ventilateur actif (120) et/ou de tout ventilateur actif supplémentaire qui sont alimentées en électricité et/ou la commande de celui-ci sont placées sur le côté extérieur ou à l'extérieur de l'appareil d'entretien.

3. Appareil d'entretien selon la revendication 1 ou 2, **caractérisé par** un ventilateur actif (134) supplémentaire pour alimenter en air ambiant une pompe à vide (132) disposée dans le collecteur de gaz (110) de type cheminée.

4. Appareil d'entretien selon l'une quelconque des revendications 1 à 3, **caractérisé en ce qu**'au moins une pompe à vide (132), notamment une pompe à vide classique, est utilisée dans l'appareil d'entretien de climatiseur, la partie électrique de la pompe à vide (132) entrant en contact avec le gaz à évacuer.

5. Appareil d'entretien selon l'une quelconque des revendications 1 à 4, **caractérisé par** un ventilateur actif (136) supplémentaire pour alimenter en air ambiant un condensateur (130) disposé dans le collecteur de gaz (110) de type cheminée.

6. Appareil d'entretien selon l'une quelconque des revendications 1 à 5, **caractérisé en ce que** les flux d'air de tous les ventilateurs actifs peuvent être déviés sous la forme d'un flux d'air total (140) via un orifice de sortie (110B) côté plancher du collecteur de gaz (110) de type cheminée.

7. Appareil d'entretien selon l'une quelconque des revendications 1 à 6, **caractérisé en ce que** des cuves de stockage (124A, 124B, 124C) supplémentaires de l'appareil d'entretien sont fluidiquement isolées par rapport au collecteur de gaz (110) de type cheminée par au moins une paroi d'isolement (118).

8. Appareil d'entretien selon l'une quelconque des revendications 1 à 7, **caractérisé en ce qu**'au moins une partie des zones de l'appareil d'entretien entrant ou pouvant entrer en contact avec le gaz du frigorigène de manière systématique ou suite à des fuites, peuvent être/sont fluidiquement raccordées au collecteur de type cheminée et sont ou peuvent être isolées du reste de l'atmosphère ambiante.

9. Appareil d'entretien selon l'une quelconque des revendications 1 à 8, **caractérisé en ce que** d'éventuels autres ventilateurs actifs, le moteur électrique d'une pompe à vide éventuelle et/ou un compresseur sont de préférence montés de manière à ne pouvoir généralement démarrer que lorsque le flux d'air orienté vers le bas est actif dans le collecteur de gaz (110) de type cheminée.

10. Procédé permettant d'éliminer le frigorigène ou un mélange de frigorigène/huile de compresseur d'un climatiseur de véhicule et pour reremplir le climatiseur de véhicule avec du frigorigène et, le cas échéant, avec de l'huile de compresseur à l'aide d'un appareil d'entretien comprenant au moins un conteneur (126) pour frigorigène et une pompe à vide (132) pour générer une dépression dans le climatiseur de véhicule vidangé de frigorigène et/ou de mélange frigorigène/huile de compresseur pour une admission subséquente de frigorigène et le cas échéant d'huile de compresseur dans le climatiseur de véhicule à reremplir
**caractérisé en ce qu**'un collecteur de gaz (110) de type cheminée est doté d'ouvertures supérieure et inférieure (110A, 110B) dans l'appareil d'entretien (100) en étant isolé du reste de l'atmosphère ambiante et en ce que
le collecteur de gaz de type cheminée est traversé de haut en bas par de l'air ambiant, notamment par le biais d'au moins un ventilateur actif (120).

11. Procédé selon la revendication 10, **caractérisé en ce que** l'au moins un ventilateur actif (120) reste coupé pour le collecteur de gaz (110) de type cheminée pendant les phases d'arrêt ou les phases de non-utilisation de l'appareil d'entretien, et **en ce que** les gaz descendent dans le collecteur de type cheminée de manière à s'échapper dans l'atmosphère ambiante par l'ouverture inférieure du collecteur de type cheminée.

12. Procédé selon la revendication 10 ou 11, comprenant une étape de séparation pour le mélange frigorigène/huile de compresseur, **caractérisé en ce qu**'une pompe à vide (132) purge les résidus se trouvant dans le système du circuit de frigorigène du climatiseur de véhicule et en ce que le système du circuit de frigorigène est fluidiquement relié par la pompe à vide à un étage de séparation pour mélange frigorigène/huile de compresseur afin de récupérer le frigorigène de la vidange des résidus se trouvant dans le système du circuit de frigorigène.
